# EUROPÄISCHE PATENTSCHRIFT

(11) **EP 1 329 000 B1**
(45) Veröffentlichungstag und Bekanntmachung des Hinweises auf die Patenterteilung: **30.11.2005**
(21) Anmeldenummer: 01976021.4
(22) Anmeldetag: 06.09.2001
(51) Int. Cl.: H01Q 1/32, H01Q 1/52

(54) **FAHRZEUGANTENNENEINRICHTUNG**
VEHICLE ANTENNA DEVICE
DISPOSITIF D'ANTENNE DE VEHICULE AUTOMOBILE

(30) Priorität: 06.09.2000 DE 10043757
(43) Veröffentlichungstag der Anmeldung: 23.07.2003
(73) Patentinhaber: ROBERT BOSCH GMBH, 70442 Stuttgart (DE)
(72) Erfinder: RADDANT, Hans-Joachim, 14055 Berlin (DE)
(86) Internationale Anmeldenummer: PCT/DE2001/003421
(87) Internationale Veröffentlichungsnummer: WO 2002/021634

(56) Entgegenhaltungen:
- EP-A- 0 221 694
- EP-A- 0 994 525
- DE-A- 19 636 477
- FR-A- 2 742 584
- US-A- 4 968 984

## Beschreibung

### Stand der Technik

Die Erfindung geht von einer Fahrzeugantenneneinrichtung nach der Gattung des Hauptanspruchs aus.

Aus der DE 196 36 477 A1 ist bereits eine Fahrzeugantenneneinrichtung bekannt. Diese umfasst eine als Antenne wirksame leitende Struktur in einem vom Fahrzeuginneren durch eine Karosseriewand getrennten Kotflügel aus nicht leitendem Material.

US 4 968 984 beschreibt eine Fahrzeugantenneneinrichtung mit einer als Antenne wirksamen leitenden Struktur, bei der die Antenne durch eine Abschirmwand aus elektrisch leitfähigem Material, die mit der Karosseriewand elektrisch leitend verbunden ist und zwischen Radlager und Antenne angeordnet ist.

### Vorteile der Erfindung

Die erfindungsgemäße Fahrzeugantenneneinrichtung mit den Merkmalen des Hauptanspruchs hat demgegenüber den Vorteil, dass die Abschirmwand durch eine oberhalb des dem Radlager zugeordneten Rades angeordnete Spritzschutzwand gebildet ist, wobei die elektrisch leitende Struktur auf der dem Rad abgewandten Seite der Spritzschutzwand und elektrisch isoliert von dieser angeordnet ist. Auf diese Weise kann eine sowieso schon vorhandene Spritzschutzwand zum Schutz des Kotflügels vor Witterungseinflüssen durch metallische und somit elektrisch leitende Ausbildung gleichzeitig der Abschirmung der Struktur dienen, so dass für die Abschirmung der Struktur kein zusätzlicher Material- und Herstellungsaufwand erforderlich ist und somit auch keine zusätzlichen Kosten anfallen.

Durch die im Unteransprüch aufgeführten Maßnahmen sind vorteilhafte Weiterbildungen und Verbesserungen der im Hauptanspruch angegebenen Fahrzeugantenneneinrichtung möglich.

Ein weiterer Vorteil besteht darin, dass die Spritzschutzwand in ein äußeres elektrisch leitfähiges und das Rad zumindest teilweise abdeckendes Kotflügelteil übergeht und dass der Kotflügel an seiner der Karosseriewand zugewandten Seite aus elektrisch nicht leitendem Material gebildet ist und oberhalb der Spritzschutzwand und des äußeren Kotflügelteils einen Hohlraum bildet, in dem die Struktur angeordnet ist. Auf diese Weise verbessert sich die Abschirmung der Struktur, da die Abschirmwand durch das äußere Kotflügelteil fortgesetzt wird, so dass auch das äußere Kotflügelteil zur Abschirmung der Struktur vor den elektrostatischen Entladungen des Radlagers beiträgt.

### Zeichnung

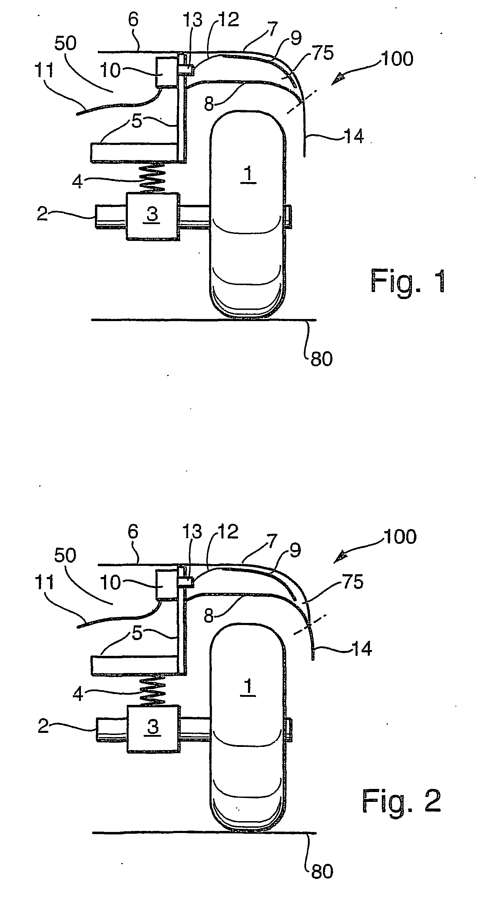

Ausführungsbeispiele der Erfindung sind in der Zeichnung dargestellt und in der nachfolgenden Beschreibung näher erläutert. Es zeigen Figur 1 ein erstes Ausführungsbeispiel einer erfindungsgemäßen Fahrzeugantenneneinrichtung und Figur 2 ein zweites Ausführungsbeispiel einer erfindungsgemäßen Fahrzeugantenneneinrichtung.

### Beschreibung der Ausführungsbeispiele

In Figur 1 kennzeichnet 100 eine Fahrzeugantenneneinrichtung. An einer Karosseriewand 5 eines Kraftfahrzeugs ist dabei über ein Federbein 4 ein Radlager 3 befestigt. Im Radlager 3 läuft eine Achse 2, an der ein Rad 1 befestigt ist. Insbesondere beim Drehen der Achse 2 im Radlager 3 zur Bewegung des Rades 1 kommt es im Radlager 3 zu elektrostatischen Entladungen. Während das Federbein 4 mit dem Radlager 3 an der einer Fahrbahn 80 zugewandten Seite der Karosseriewand 5 angeordnet ist, trägt die Karosseriewand 5 auf der der Fahrbahn 80 abgewandten Seite einen Kotflügel 7, 14, der das Rad 1 nach oben hin abdeckt, sowie eine Wandabdeckung 6, beispielsweise eines Kofferraums, in die der Kotflügel 7, 14 übergeht. Der Kotflügel 7, 14 umfasst gemäß Figur 1 zwei Teile, wie durch die gestrichelte Linie in Abbildung 1 zum Ausdruck kommen soll. Ein erster Teil 7 des Kotflügels 7, 14 ist dabei durch dessen der Karosseriewand 5 zugewandte Seite gebildet und stellt eine obere Abdeckung des Rades 1 dar. Ein zweiter oder äußerer Kotflügelteil 14 bildet eine seitliche Abdeckung des Rades 1 in Fortsetzung zum ersten Teil 7 des Kotflügels 7, 14. Gemäß der Ausführungsform nach Figur 1 sind sowohl der erste Teil 7 als auch der zweite Teil 14 des Kotflügels 7, 14 aus einem elektrisch nicht leitenden Material gebildet.

An der dem Rad 1 zugewandten Seite des ersten Teils 7 des Kotflügels 7, 14 ist gemäß Figur 1 eine elektrisch leitende Struktur 9 angeordnet, die als Fahrzeugantenne wirkt. Die Struktur 9 kann dabei beispielsweise über einen Isolierkörper am ersten Teil 7 befestigt sein. Über einen Anschlußdraht 12 ist die Struktur 9 mit einem Modul 10 an der dem Fahrzeuginneren 50 zugewandten Seite der Karosseriewand 5 durch eine Dichtungstülle 13 durch die Karosseriewand 5 hindurch verbunden. Das Modul 10 kann je nach Anforderung eine oder mehrere passive Anpassungsschaltungen oder Antennenverstärker enthalten. Vom Modul 10 wird das von der Struktur 9 empfangene und im Modul 10 angepasste und/oder verstärkte Antennensignal über ein Antennenkabel 11 zu einem Empfänger weitergeleitet.

Gemäß Figur 1 ist weiterhin eine Abschirmwand 8 aus elektrisch leitfähigem Material vorgesehen, die mit der Karosseriewand 5 elektrisch leitend verbunden und zwischen dem Rad 1 und somit auch dem Radlager 3 einerseits und der elektrisch leitenden Struktur 9 andererseits angeordnet ist. Die Abschirmwand 8 schirmt auf diese Weise die Struktur 9 vor den elektrostatischen Entladungen im Radlager 3 ab und verhindert dadurch die Einkopplung entsprechender Störungen in das von der Struktur 9 empfangene Antennensignal.

Die Abschirmwand 8 bildet zusammen mit dem ersten Teil 7 des Kotflügels 7, 14 einen Hohlraum, in dem die Struktur 9 auf der dem Rad 1 abgewandten Seite der Abschirmwand 8 und elektrisch isoliert von dieser angeordnet ist. Der so gebildete Hohlraum ist vom Fahrzeuginneren durch die Karosseriewand 5 getrennt. Die Abschirmwand 8 kann gleichzeitig als Spritzschutzwand dienen und schützt durch ihre Anordnung oberhalb des dem Radlader 3 zugeordneten Rades 1 den gebildeten Hohlraum mit der Struktur 9, dem Anschlußdraht 12, der Dichtungstülle 13 und dem ersten Teil 7 des Kotflügels 7, 14 vor Witterungseinflüssen und vor allem vor Feuchtigkeit, die von der Fahrbahn 80 über das Rad 1 aufgenommen wird. Damit wird auch verhindert, dass Wasser über die Dichtungstülle 13 in den Verstärker 10 eindringen kann.

Eine noch bessere Abschirmwirkung wird gemäß einem weiteren Ausführungsbeispiel nach Figur 2 erzielt, in der gleiche Bezugszeichen gleiche Elemente kennzeichnen wie in Figur 1. Die zweite Ausführungsform nach Figur 2 entspricht der ersten Ausführungsform nach Figur 1 mit dem Unterschied, dass das zweite Teil 14 des Kotflügels 7, 14 nun aus elektrisch leitfähigem Material gebildet ist, wohingegen das erste Teil 7 der Karosserie 7, 14 nach wie vor aus elektrisch nicht leitendem Material gebildet ist. Somit kann das zweite Teil 14 des Kotflügels 7, 14 wie in Figur 2 dargestellt die Abschirm- bzw. Spritzschutzwand 8 direkt fortsetzen und einstückig mit dieser ausgebildet sein. Auf diese Weise trägt das zweite Teil 14 des Kotflügels 7, 14 ebenfalls zur Abschirmung bei, die aufgrund der zumindest teilweisen seitlichen Abdeckung des Rades 1 durch das zweite Teil 14 des Kotflügels 7, 14 noch verbessert wird. Die Abschirmwand 8 wird durch das zweite Teil 14 des Kotflügels 7, 14 weiter in Richtung zur Fahrbahn 80 verlängert, so dass der darüberliegende Teil besser vor den elektrostatischen Entladungen im Radlager 3 abgeschirmt wird. Oberhalb der Abschirmwand 8 und des zweiten bzw. äußeren Teils 14 des Kotflügels 7, 14 bildet sich dabei nach wie vor ein Hohlraum, in dem die Struktur 9 in der beschriebenen Weise angeordnet ist. Der Hohlraum ist in beiden Figuren durch das Bezugszeichen 75 gekennzeichnet.

Elektrisch leitfähige Teile wie die Karosseriewand 5, die Abschirmwand 8 und das zweite Teil 14 des Kotflügels 7, 14 gemäß der zweiten Ausführungsform nach Figur 2 können aus Metall gebildet sein, wohingegen elektrisch nicht leitende Teile, wie das erste Teil 7 des Kotflügels 7, 14 aus Kunststoff gebildet sein können.

## Patentansprüche

1. Fahrzeugantenneneinrichtung (100) mit einer als Antenne wirksamen elektrisch leitenden Struktur (9) in einem vom Fahrzeuginneren (50) durch eine elektrisch leitfähige Karosseriewand (5) getrennten Kotflügel (7, 14), der im Bereich der Struktur (9) aus elektrisch nichtleitendem Material gebildet ist, **dadurch gekennzeichnet, daß** eine Abschirmwand (8) aus elektrisch leitfähigem Material vorgesehen ist, die mit der Karosseriewand (5) elektrisch leitend verbunden und zwischen einem Radlager (3) und der elektrisch leitenden Struktur (9) angeordnet ist, wobei die Abschirmwand (8) durch eine oberhalb des dem Radlager (3) zugeordneten Rades (1) angeordnete Spritzschutzwand gebildet ist, und wobei die elektrisch leitende Struktur (9) auf der dem Rad (1) abgewandten Seite der Spritzschutzwand (8) und elektrisch isoliert von dieser angeordnet ist.

2. Fahrzeugantenneneinrichtung (100) nach Anspruch 1, **dadurch gekennzeichnet, daß** die Spritzschutzwand (8) in ein äußeres elektrisch leitfähiges und das Rad (1) zumindest teilweise abdeckendes Kotflügelteil (14) übergeht und daß der Kotflügel (7, 14) an seiner der Karosseriewand (5) zugewandten Seite (7) aus elektrisch nichtleitendem Material gebildet ist und oberhalb der Spritzschutzwand (8) und des äußeren Kotflügelteils (14) einen Hohlraum (75) bildet, in dem die Struktur (9) angeordnet ist.

## Claims

1. Vehicle antenna device (100) comprising an electrically conducting structure (9) which acts as an antenna in a mudguard (7, 14), which is separated from the vehicle interior (50) by an electrically conductive body panel (5), the mudguard being made of an electrically nonconducting material in the area of the structure (9), **characterized in that** a shielding wall (8) made of an electrically conductive material is provided, this wall being electrically conductively connected to the body panel (5) and being arranged between a wheel bearing (3) and the electrically conducting structure (9), the shielding wall (8) being formed by a splash guard wall arranged above the wheel (1) assigned to the wheel bearing (3), and the electrically conducting structure (9) being aranged on the side of the splash guard wall (8) facing away from the wheel (1) and insulated from it electrically.

2. Vehicle antenna device (100) according to Claim 1, **characterized in that** the splash guard wall (8) goes over into an external, electrically conductive mudguard part (14) which at least partially covers the wheel (1) and **in that**, on its side (7) facing the body panel (5), the mudguard (7, 14) is formed from electrically nonconducting material and, above the splash guard wall (8) and the outer mudguard part (14), it forms a cavity (75) in which the structure (9) is arranged.

## Revendications

1. Dispositif d'antenne de véhicule (100) comprenant une structure électroconductrice (9) se comportant comme une antenne placée dans une aile (7, 14) qui est séparée de l'intérieur du véhicule (50) par une paroi électroconductrice (5) de la carrosserie, laquelle aile est en matière non électroconductrice dans la zone de la structure (9),
**caractérisé en ce qu'**
une paroi de blindage (8) en matière électroconductrice est reliée à la paroi (5) de la carrosserie par une liaison électroconductrice et disposée entre un support de roue (3) et la structure électroconductrice (9), la paroi de blindage (8) étant formée d'une paroi de protection contre les projections disposée au-dessus de la roue (1) associée au support de roue (3), et la structure électroconductrice (9) est disposée sur le côté de la paroi de protection contre les projections (8) éloigné de la roue (1), en étant isolée électriquement de cette paroi.

2. Dispositif d'antenne de véhicule (100) selon la revendication 1,
**caractérisé en ce que**
la paroi de protection contre les projections (8) se termine par une partie extérieure électroconductrice (14) de l'aile, qui recouvre au moins partiellement la roue (1), et l'aile (7, 14) est formée d'une matière non électroconductrice sur son côté (7) dirigé vers la paroi (5) de la carrosserie et forme, au-dessus de la paroi de protection contre les projections (8) et de la partie extérieure (14) de l'aile, une cavité (75) dans laquelle la structure (9) est disposée.
